# EUROPEAN PATENT SPECIFICATION

(11) **EP 1 604 844 B1**
(45) Date of publication and mention of the grant of the patent: **05.11.2008**
(21) Application number: 05104831.2
(22) Date of filing: 03.06.2005
(51) Int. Cl.: B60G 17/017

(54) **Electronic control system for vehicle operating units**
Elektronische Kontrolle von Betriebseinheiten eines Fahrzeuges
Contrôle électronique des dispositifs d'actionnement d'un véhicule

(30) Priority: 10.06.2004 IT MI20041160
(43) Date of publication of application: 14.12.2005
(73) Proprietor: PIAGGIO & C. S.p.A., 56025 Pontedera (Pisa) (IT)
(72) Inventor: ZEMA, Massimo, 56124, PISA (IT)
(74) Representative: De Gregori, Antonella

(56) References cited:
- WO-A-02/068228
- DE-A- 10 123 653
- US-A1- 2003 060 327
- US-A1- 2003 227 166
- "THIS TRICYCLE IS NOT FOR KIDS" MECHANICAL ENGINEERING, ASME. NEW YORK, US, vol. 120, no. 2, February 1998 (1998-02), page 12, XP000766194 ISSN: 0025-6501
- XP001175892

## Description

The present invention refers to an electronic control system for a selective driving device, or a parking device, for vehicles having inter-correlated operating units, such as anti-roll systems, and stroke arrest devices on the suspension and brake system.

In the field of two-wheeled and four-wheeled vehicles a wide variety of different models has already been proposed, and in particular, there is an increasing interest towards "hybrid" vehicles that combine both aspects of the easy handling of the motorcycle as well as the stability of the four-wheeled vehicle.

For example, these models have been represented by three-wheeled vehicles equipped with two front steering wheels, and the four-wheeled vehicles commonly known as QUADs.

These vehicles, that are becoming increasingly more complex, require varied intercorrelation in operating units, such as anti-rolling action, and stroke arrest devices for suspension and brakes.

These operating units are combined to form the parking unit.

In fact, it can occur during certain types of manoeuvre, for example, during temporary pauses for parking or at traffic lights, that it becomes necessary to activate said operating unit to prevent the lack of balance that can cause the pilot to fall (from the vehicle). On the other hand, during normal vehicle function the brakes need to be activated separately from all other units.

The selective operating device is used to release the first operating unit from the second operating unit during vehicle travel in a first condition, and to correlate the first operating unit with a second operating unit in a second vehicle travel condition.

Document WO02068228 describes a three wheeled vehicle in which at least a pair are rolling wheels and having a tilting suspension system. In such a document, operating means that, by acting on members of the linkage mechanism connecting with each other a pair of rolling wheels of a powered, is capable of locking the banking thereof with respect to the longitudinal mid plane. A control unit is adapted to process, from each combination of two or more input data relating to state and configuration parameters of the vehicle, a single output signal that gives rise to a modulated operation of said operating means.

The Applicant studied the problem of coordinating the action of a selective activation device for a plurality of operating units on a single vehicle, such as anti-roll control, and a stroke arrest device for the suspension and the brakes thus forming a unit to be used for parking.

The Applicant has devised an electronic control system for selective activation of operating units comprising a central electronic control unit that is able to control the activation and deactivation of a anti-roll system and/or a suspension stroke arrest unit, for example.

Basically, the central control unit defines a first operating condition of the selective action defined as rest condition, a second condition defined as block condition, and a third condition defined as transitory, which represents the stage during which it switches from the first condition to the second, and vice-versa.

One of the aspects of the present invention concerns an electronic control system for at least one driving device of at least one operating unit of a vehicle according to claim 1, in particular, comprising a central electronic control unit able to control the activation and deactivation of said at least one device, wherein said central unit control defines a first operating condition of the selective actions defined as rest condition, a second condition defined as block condition, and a third condition defined as transitory, that represents the switch-over stage between the other two conditions.

The characteristics and advantages of the electronic control system according to the present invention will be made clearer in the following description provided as an example but which is by no means limitative, with reference to the appended schematic drawings wherein:
- Figure 1 shows a schematic view of the control system according to the present invention;
- Figure 2 shows a flow diagram of the main operations performed by the control system according to the present invention;
- Figure 3 shows a flow diagram of the operations performed by the control system during the transitory stage according to the present invention;
- Figure 4 shows a flow diagram of the operations performed by the control system during the stage of revolutions limiting according to the present invention;

In the aforesaid figures the electronic control system according to the present invention comprises an electronic processing control unit 2, that receives sense signals from a plurality of sensors and transmits at least one command signal for at least one of said vehicle operating units.

The system also comprises an electric starter 21, which is a component part of an actuator for at least one of the said operating units.

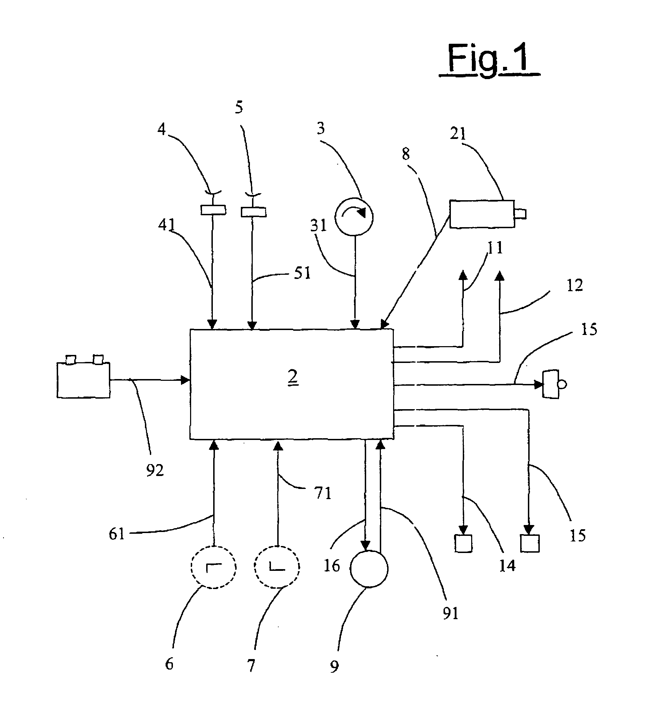

In the embodiment shown in figure 1, the system comprises a speed sensor 3 for each front wheel of the vehicle from which a corresponding speed signal 31 is sensed for each front wheel, a gas knob sensor 4 from which a corresponding gas signal 41 is sensed, a command signal 5 from which a corresponding signal command signal 51 is sensed, an "up" limit stop 6 associated with an "up" limit stop signal 61, a "down" limit stop 7 associated with a "down" limit stop signal 71, a sensor that measures the current of the electric starter 8, a sensor 9 that measures the number of revolutions of the motor which is associated with a revolution number signal 91, and a signal from the padlocked battery 92.

Said "UP" and "DOWN" limit stop sensors are basically composed of a reading sensor that senses the operating condition (rest or block or transitory).

The command signals shown in the figures comprise a command signal 11 to deviate the UP state/DOWN state of the electric starter, a command signal 12 to deviate the DOWN state/OFF state of the electric starter, a pilot signal 13 to show the system state, a pilot signal 14 to show system fault state, an acoustic warning signal 15 for the pick-up flywheel 16 (to limit motor revolutions).

Said deviation command signals 11 and 12 form the command signal for switching over the operation condition.

The central electronic control unit identifies an operating condition or state of the various units on the vehicle and identifies at least two logical states according to the signals 61 and 71 received from the two UP and DOWN limit stops.

The possible states are a DOWN rest state, an actuated UP block state, and a transitory state that represents the state as it switches from one of the two states to the other.

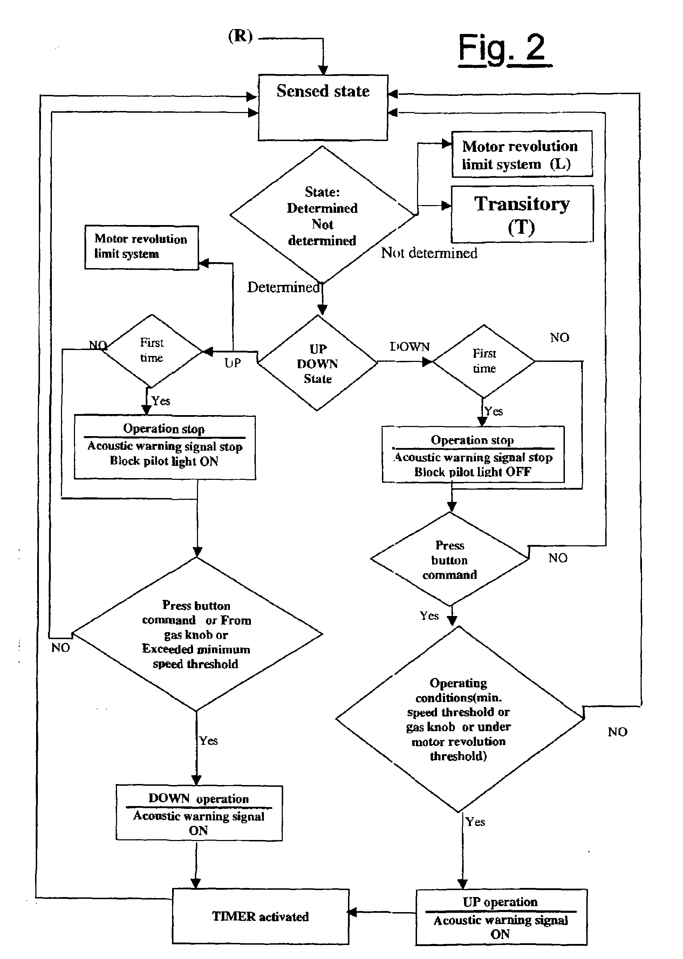

Figure 2 shows a flow diagram of the main operations performed by the central control unit during the monitoring and control of the system state.

The DOWN rest state is characterised by the closed Down limit stop signal.

The selective action device, or parking device is not activated and the state pilot signal is switched off; moreover, the function used to limit the number of motor revolutions is not activated.

The relay switches are not triggered and their outputs will provoke a short-circuit on the electric starter 21.

It is possible to switch over to the block state, only if both speed sensors 3 signal a value that is lower than a pre-established threshold (pre-selectable), the gas knob is in rest position and the impulse frequency of the motor revolution sensor 9 (pick-up) is under a certain threshold (programmable).

Only when these conditions are present the system can be switched over by the deviator command button 11 from OFF to ON, otherwise any switchover by the press-button will have no effect.

If all the aforesaid conditions are present, when the (OFF-ON) switch button is pressed, the electric starter 21 is activated (in the appropriate rotation direction) so that the central control unit selects the outputs in an adequate manner for the relay switch command. In this case the acoustic warning signal 15 will also be activated.

The actuated UP block state is the state of the system characterised when the UP limit stop is closed. In this state of the system the parking device is activated and the state pilot light is switched on; moreover this also activates the function to limit the number of motor revolutions. The relay switches are not triggered and their outputs are capable of provoking a short circuit in the starter.

It is possible to switch over to rest state using two different options:
- By activating the gas knob (the central control unit is sensitive to the logical state of the sensor on the gas knob 4);
- By pressing the control button of the OFF-ON switch.

In both cases, after a possible delay (programmable from the central control unit) the electric starter 21 is activated (in the appropriate rotation direction). In this condition the acoustic warning signal is also activated.

In the case in which, even though neither of the two aforesaid manoeuvres have been performed, at least one of the two front wheel speed sensors signals a certain threshold has been exceeded (for example in the case of start-up on a down-hill slope), the electric starter will be activated (in the appropriate rotation direction to obtain the system release action).

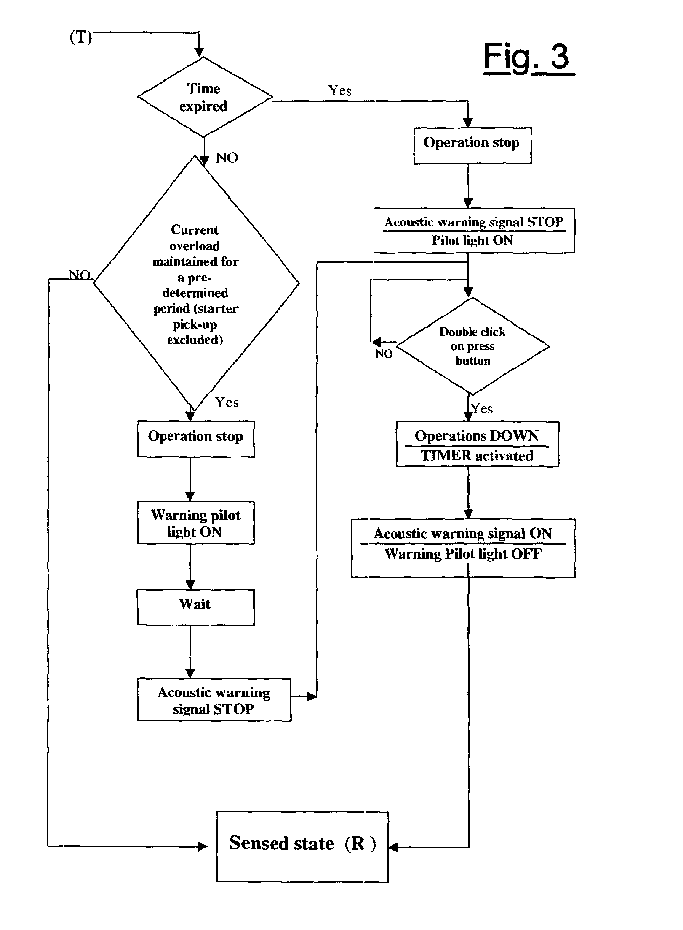

The transition or transitory stage showed as an example in the flow chart in figure 3, is the switch-over stage from rest state to the actuated block state, or vice-versa: more specifically, the system enters the transitory stage as soon as the central control unit has selected the outputs for the relay switch commands. During the transitory stage the function to limit the number of motor revolutions is activated. The electric starter operation (performed in the stable state in which start-up has been requested) continues until one of the following conditions is achieved;
1. The system has reached the other stable state (signalled by the limit stop); in this case the acoustic warning signal is also deactivated;
2. A current overload has occurred (the current threshold can be selected previously): the system will remain in transitory state;
3. The maximum operating time has been exceeded (the time threshold can be programmed from the central control unit): the system will remain in transitory state.

In cases 2 and 3 the operation does not conclude with the reaching of a stable state, and therefore the system will signal that a fault has occurred and the fault signal pilot light 14 will switch on.

At this point the system will wait the established time (programmable) after which the acoustic warning signal and the state pilot light will both switch off.

From this moment on, and for a previously programmed period (that can be limitless) the system will remain stable awaiting a single command, because the fault registered previously could be simply temporary, and therefore the press-button command is used in an attempt to start the system function again. This command (double click on the command button) is interpreted as a request to return to rest state, and therefore the central control unit will reset the relay outputs appropriately, and the system will return to the waiting condition described at the beginning of the previous paragraph. However, if the double click is not performed within the established time lapse, the system will stall, and the initial central control unit condition must be reset.

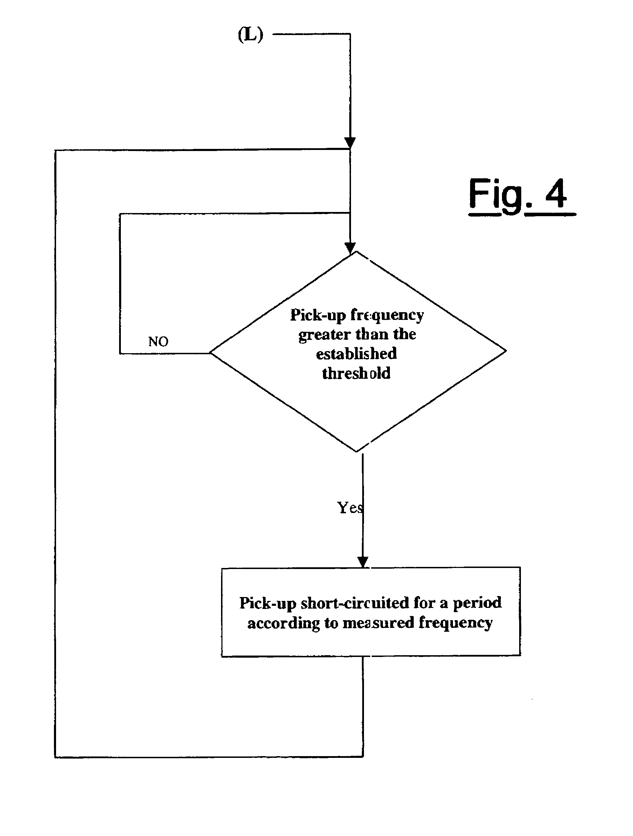

The function used to limit the number of motor revolutions, shown as an example in the flow diagram in figure 4, acts on the revolution number sensor, evaluating the frequency of the impulses from which the value of the motor revolutions is obtained.

The actuation strategy is described as follows: if the time lapse that occurs between the two consecutive positive peaks is lower than a certain threshold (high motor revolutions), then the pick-up will short-circuit to earth for a certain time (this period can vary according to the measured interval); when this time lapse is terminated, or if the rest state has been reached in the meantime, the pick-up will not short-circuit any further. If the conditions continue, the procedure will remain active and will therefore wait for two further consecutive pick-up peaks, followed by the activation of the same strategy described above.

## Claims

1. Electronic control system for at least one driving device of at least one operating unit for vehicles, having inter-correlated operating units such as anti-roll systems and stroke arrest devices on the suspension and brake systems comprising a central electronic control unit (2) that controls the activation and deactivation of said at least one device, said central control unit defines a first operating condition of the selective actions defined as rest state, a second condition defined as block state, and a third condition defined as transitory state which represents the switch-over stage from one of the other two conditions to the other,
said central control unit receives sensing signals from a plurality of sensors and monitoring said operating condition or state of the various units of the vehicle, and transmits at least one command signal (11, 12, 13, 14, 15, 16) for at least one of said vehicle operation units,
said at least one command signal determines the transition from rest condition to block condition and vice-versa
said command signal is transmitted to an actuator (21) driven by an electric motor able to command said at least one operating unit for vehicles.

2. Electronic control system according to claim 1, wherein said central control unit determines a fourth condition defined as revolution limit wherein the number of vehicle motor revolutions is previously established.

3. Electronic control system according to claim 1, wherein said plurality of sensors comprise a speed sensor (3) for each front vehicle wheel from which is sensed a corresponding speed signal (31) for each front wheel, a gas knob sensor (4) from which is sensed a corresponding gas signal (41), and a command sensor (5) from which a corresponding input command signal is sensed (51).

4. Electronic control system according to claim 1 , wherein said plurality of sensors comprise a sensor that identifies said operating function, a sensor that measures the current of the electric starter (8), a sensor that measures the number of motor revolutions (9), associated with revolution number signal (91), and a padlocked battery signal (92).

5. Electronic control system according to claim 1 , wherein said sensor that identifies the operating condition comprises an "UP" limit stop associated with an UP limit stop signal, and a "DOWN" limit stop associates with a "down" limit stop signal.

6. Electronic control system according to claim 1 , wherein said at least one command signal comprises a pilot signal (13) showing the state of the system, a pilot signal (14) showing system fault, an acoustic warning signal (15), and a Pick-up flywheel signal (16).

## Patentansprüche

1. Elektronisches Kontrollsystem für zumindest eine Antriebseinheit von zumindest einer Betriebseinheit für Fahrzeuge mit miteinander verbundenen Betriebseinheiten, wie beispielsweise Antirollsystemen und Federwegfeststelleinrichtungen an der Aufhängung und Bremssystemen, mit einer zentralen elektronischen Kontrolleinheit (2), welche die Aktivierung und Deaktivierung der genannten zumindest einen Einrichtung steuert, wobei die genannte zentrale Kontrolleinheit einen ersten Betriebszustand der speziellen Funktionen, der als Ruhezustand bezeichnet wird, einen zweiten Zustand, der als Sperrzustand bezeichnet wird, und einen dritten Zustand, welcher als Übergangszustand bezeichnet wird, definiert, welcher Zustand den Übergangszustand von dem einen der anderen beiden Zustände zu dem anderen darstellt, wobei die genannte zentrale Kontrolleinheit Sensorsignale von einer Mehrzahl von Sensoren umfasst und die genannte Betriebsart oder den genannten Betriebszustand der verschiedenen Einheiten des Fahrzeugs überwacht und zumindest ein Steuersignal (11, 12, 13, 14, 15, 16) für zumindest eine der genannten Betriebseinheiten des Fahrzeugs übermittelt, wobei das genannte zumindest eine Steuersignal den Übergang vom Ruhezustand zum Sperrzustand bestimmt und umgekehrt und wobei das genannte Steuersignal an einen Aktuator (21) übermittelt wird, welcher von einem Elektromotor angetrieben ist, der in der Lage ist, die genannte zumindest eine Betriebseinheit für Fahrzeuge zu steuern.

2. Elektronisches Kontrollsystem nach Anspruch 1, wobei die genannte zentrale Kontrolleinheit einen vierten Zustand bestimmt, welcher als Umdrehungsbegrenzung definiert ist, wobei die Drehzahl des Fahrzeugmotors zuvor hergestellt wird.

3. Elektronisches Kontrollsystem nach Anspruch 1, wobei die genannte Mehrzahl von Sensoren einen Geschwindigkeitssensor (3) für jedes Vorderrad des Fahrzeugs umfasst, von welchem ein entsprechendes Geschwindigkeitssignal (31) für jedes Vorderrad abgenommen wird, einen Gasknopfsensor (4), von welchem ein entsprechendes Gassignal (41) abgenommen wird und einen Steuersensor (5), vor welchem ein entsprechendes Eingabekommandosignal (51) abgenommen wird.

4. Elektronisches Kontrollsystem nach Anspruch 1, wobei die genannte Mehrzahl von Sensoren einen Sensor, welcher die genannten Betriebsfunktionen identifiziert, einen Sensor, welcher den Strom des elektrischen Starters (8) misst, einen Sensor, welcher die Drehzahl (9) des Motors misst, welche mit dem Drehzahlsignal (91) zusammenhängt, und ein verschlüsseltes Batteriesignal (92) umfasst.

5. Elektronisches Kontrollsystem nach Anspruch 1, wobei der genannte Sensor, welcher den Betriebszustand identifiziert, ein "UP" Limitstopp, welches mit einem "UP" Limitstoppsignal zusammenhängt, und ein "DOWN" Limitstopp, welches mit einem "DOWN" Limitstoppsignal zusammenhängt, umfasst.

6. Elektronisches Kontrollsystem nach Anspruch 1, wobei das genannte zumindest eine Steuersignal ein Pilotsignal (13), welches den Zustand des Systems anzeigt, ein Pilotsignal (14), welches einen Systemfehler anzeigt, ein akustisches Warnsignal (15) und ein Pick-up Schwungscheibensignal (16) umfasst.

## Revendications

1. Système de contrôle électronique pour au moins un dispositif d'entraînement d'au moins une unité d'actionnement pour des véhicules, ayant des unités d'actionnement intercorrélées comme des systèmes d'antiroulis et des dispositifs d'arrêt de course sur les systèmes de suspension et de frein, comprenant une unité de contrôle électronique centrale (2) qui contrôle l'activation et la désactivation dudit au moins un dispositif, ladite unité de contrôle centrale définit une première condition d'actionnement des actions sélectives définie en tant qu'état de repos, une deuxième condition définie en tant qu'état de bloc, et une troisième condition définie en tant qu'état transitoire qui représente l'étage de commutation entre l'une des deux autres conditions et l'autre,
ladite unité de contrôle centrale reçoit des signaux de détection d'une pluralité de capteurs et de la surveillance de ladite condition d'actionnement ou de l'état des diverses unités du véhicule, et transmet au moins un signal de commande (11, 12, 13, 14, 15, 16) pour au moins l'une desdites unités d'actionnement de véhicule,
ledit au moins un signal de commande détermine la transition de la condition de repos à la condition de bloc et vice versa,
ledit signal de commande est transmis à un actionneur (21) actionné par un moteur électrique capable de commander ladite au moins une unité d'actionnement pour des véhicules.

2. Système de contrôle électronique selon la revendication 1, dans lequel ladite unité de contrôle centrale détermine une quatrième condition définie en tant que limite de tours dans lequel le nombre de tours de moteur de véhicule est établi au préalable.

3. Système de contrôle électronique selon la revendication 1, dans lequel ladite pluralité de capteurs comprend un capteur de vitesse (3) pour chaque roue avant de véhicule de laquelle est détecté un signal de vitesse correspondant (31) pour chaque roue avant, un capteur de molette de gaz (4) duquel est détecté un signal de gaz correspondant (41), et un capteur de commande (5) duquel un signal de commande d'entrée correspondant (51) est détecté.

4. Système de contrôle électronique selon la revendication 1, dans lequel ladite pluralité de capteurs comprend un capteur qui identifie ladite fonction d'actionnement, un capteur qui mesure le courant du démarreur électrique (8), un capteur qui mesure le nombre de tours de moteur (9), associé au signal de nombre de tours (91) et un signal de batterie verrouillée (92).

5. Système de contrôle électronique selon la revendication 1, dans lequel ledit capteur qui identifie la condition d'actionnement comprend un seuil de limite supérieure « UP » associé à un signal de seuil de limite supérieure et un seuil de limite inférieure « DOWN » associé à un signal de seuil de limite inférieure.

6. Système de contrôle électronique selon la revendication 1, dans lequel ledit au moins un signal de commande comprend un signal pilote (13) représentant l'état du système, un signal pilote (14) représentant un défaut du système, un signal d'avertissement acoustique (15) et un signal de volant de capteur (16).
